# EUROPEAN PATENT SPECIFICATION

(11) **EP 2 426 677 B1**
(45) Date of publication and mention of the grant of the patent: **08.11.2017**
(21) Application number: 10305951.5
(22) Date of filing: 03.09.2010
(51) Int. Cl.: H01B 12/16

(54) **Superconducting cable**
Supraleitendes Kabel
Câble supraconducteur

(43) Date of publication of application: 07.03.2012
(73) Proprietor: Nexans, 92400 Courbevoie (FR)
(72) Inventor: HOBL, Achim, 51503, RÖSRATH (DE); DOMMERQUE, Robert, 50321, Brühl (DE)
(74) Representative: Feray, Valérie

(56) References cited:
- EP-A1- 1 818 946
- DE-B1- 1 690 009
- GB-A- 1 206 473

## Description

The present invention relates to a superconducting cable, in particular to a superconducting cable with improved guidance of the cooling medium.

Superconducting materials become non-resistive, that is the electrical resistance approaches zero, below a critical temperature Tc which is specific for a respective material. In order to become superconducting cooling of the superconducting material below the critical temperature is necessary.

Particularly suitable superconducting materials are those which have a critical temperature above the temperature of liquid nitrogen which allow cooling by liquid nitrogen being a preferred cooling medium due to its easy availability.

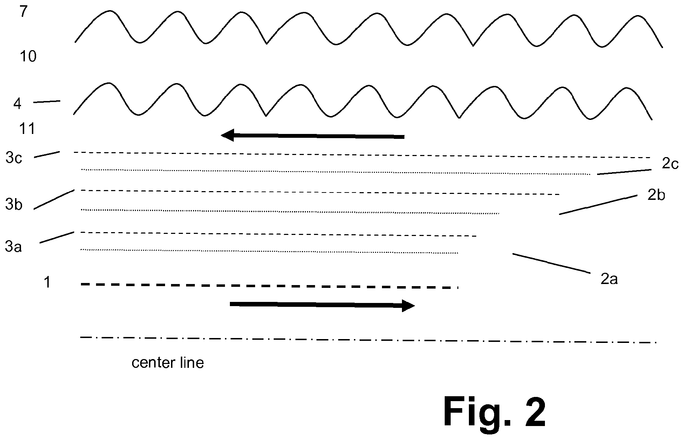

As a conventional superconducting cable, a cable has been known that has a structure in which a cable core having a superconducting conductor is housed in a pipe. **Figure 2** schematically shows the construction of such a conventional superconducting cable. The cable core is composed of a hollow former 1 and applied onto the hollow former the superconducting material 2a - 2c. Further, the superconducting material 2a - 2c is covered by an electrical insulation layer 3a - 3c. The outer peripherie of the cable core is surrounded by a conductor envelope 4, usually a further pipe or tube. Between the inner surface of the conductor envelope 4 and the surface of the outer electrical insulation layer 3c an annular gap 11 is provided.

For heat insulation a further annular gap 10 present between outer pipe 7 and conductor envelope 4 is evacuated and/or filled with superinsulation.

For cooling, the cooling medium is guided in the hollow interior of the former 1 in one direction and in the annular gap 11 between conductor envelope 4 and surface of electrical insulation 3c in the other direction. Typically, the chilled medium is conducted through the hollow interior of the former ("forward path" or "coolant forward path") and the "spent" medium is guided back through the annular gap 11 between conductor envelope 4 and electrical insulation layer 3c ("reverse path" or "coolant reserve path").

Compared to the long length of the cable the distance between the forward path and the reverse path of the medium is only small with the risk that the warmer medium of the reverse path warms up the colder medium in the forward path thereby creating a thermal bypass.

Due to this inherent warming up of the cooling medium during the course of the forward path intermediate cooling is necessary for maintaining the cooling medium in a sufficiently cooled state. Thus, after specific sections connection to a cooling equipment is necessary within the length of the cable. Such connection to a cooling equipment not only makes cable production more expensive but also more complicated.

DE 1 690 009 B1 discloses a superconductor cable according to the preamble of claim 1.

It was the object of the present invention to provide a superconducting cable with improved thermal insulation of the medium in the forward path towards the returned medium in the reverse path. In particular it was an object of the present invention to avoid thermal bypass.

According to the present invention this problem is solved by separating the coolant reserve path from the cable core and locating the coolant reserve path within the heat insulation surrounding the cable core, incorporated in a superconductor cable as defined by claim 1. According to the present invention a superconducting cable is provided which comprises at least two additional pipes arranged concentrically around the cable core with an annular gap present between adjacent pipes, and the innermost pipe and the conductor envelope. Seen in radial direction from the outside to the center according to one embodiment the cable configuration of the present invention comprises at least three annular gaps, namely between the outermost pipe and the mid-positioned pipe, the mid-positioned pipe and the inner pipe, and the inner pipe and the conductor envelope.

In the annular gap between the conductor envelope and the inner pipe a vacuum and/or superinsulation is provided for thermally insulating the cable core towards the peripheral pipe arrangement - also referred to "inner thermal insulation". Further, also the outermost gap is preferably thermally insulated, for example by providing a vacuum and/or superinsulation - also referred to "outer thermal insulation". The forward path of the cryogenic medium is within the cable core which is surrounded by the conductor envelope. The reverse path is located in an annular gap present between the outer thermal insulation and the inner thermal insulation. Consequently, the cooled cryogenic medium is thermally insulated via the inner thermal insulation towards the warmed up cryogenic medium being returned.

According to the present invention the forward path of the cooling medium is located within the cable core and the reverse path within the pipe arrangement housing the cable core for heat insulation. In particular, according to the present invention forward path and reverse path are separated by a heat-insulated region formed between the conductor envelope and the adjacent concentrically arranged pipe.

Due to this improved heat insulation any heat exchange between forward path and reverse path of the cooling medium is prevented.

Thus, longer cable length can be obtained without the need of connection to an intermediate cooling equipment for maintaining the cooling medium of the forward path sufficiently cooled.

The present invention is suitable for alternating current (AC) applications as well as direct current (DC) applications.

The cable of the present invention can be a coaxial cable with one or more superconducting conductors being concentrically arranged onto a joint central axis, typically a former.

Alternatively, more than one axes can be present within the cable core for carrying the superconducting conductors.

For example, typically, AC current comprises three phases.

Thus, a cable for a three phase AC current can have a central former with the superconducting conductors for each phase being concentrically arranged onto the former.

Alternatively, for each phase an individual former can be present carrying the superconducting conductor for said phase.

The invention is explained in more detail with reference to an exemplary embodiment schematically illustrated in the figures.

It is shown in
- **Figure 1**: schematically an embodiment of a superconductor cable of the present invention with a coaxial design, and
- **Figure 2**: schematically a conventional superconducting cable also in a coaxial design.

In the figures, identical reference numbers relate to corresponding parts.

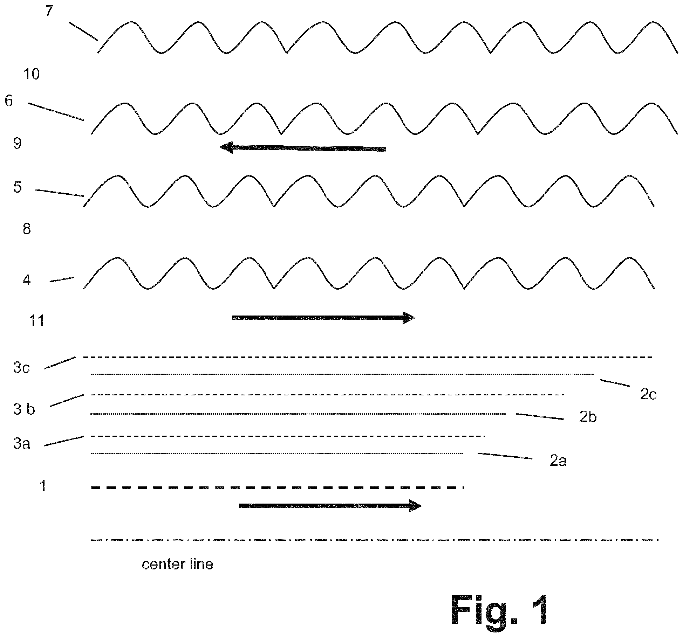

**Figure 1** shows a longitudinal cross section through an embodiment of a superconducting cable of the present invention from the outside to the center line.

The embodiment shown is a coaxial superconducting cable with one axis for alternating current (AC) or direct current (DC) applications. In AC application, typically, three superconducting conductors are provided in concentrical arrangement, one superconducting conductor for each phase of a three phased AC-current.

Alternatively, three axes can be present, one for each phase. Each axis can comprise a central former.

Of course, according to the electrical application more or less superconducting conductors can be present.

Referring to the figure, the innermost superconducting conductor 2a is arranged onto a former 1.

Further, onto each of the superconducting conductors 2a, 2b, 2c an electrical insulation layer 3a, 3b, 3c is applied. This concentrical arrangement of superconducting conductors 2a, 2b, 2c and electrical insulation layers 3a, 3b, 3c is surrounded by a conductor envelope 4.

The cable core of this embodiment composed of former 1, the superconducting conductors 2a, 2b, 2c, the insulation layers 3a, 3b, 3c and the conductor envelope 4, is concentrically surrounded by three pipes 5, 6, 7 spaced apart from each other, thereby forming annular gaps 9 and 10, and a gap 8 is present between conductor envelope 4 and inner pipe 5.

A further annular gap 11 is provided adjacent to the inner surface of conductor envelope 4, in the embodiment of the figure between conductor envelope 4 and outer insulation layer 3c.

In the embodiment shown in figure 1 a hollow former is used which can serve as forward path of the cryogenic medium, indicated by an arrow running from the left side to the right side.

In addition, the annular gap 11 can be used as a second forward path for the cryogenic medium as indicated by the arrow.

It is also possible to have only one forward path. For example, if a solid former is used or if the former is composed of a mesh or braid.

According to one embodiment, if coolant flows in gap 11 formed between conductor envelope 4 and outer superconducting conductor 2c, the outer electrical insulation 3c can be omitted since the coolant simultaneously serves as electrical insulation. According to a further embodiment, the outer electrical insulation 3c can be omitted when both the outermost superconducting conductor 2c and the conductor envelope 4 are at the same potential. As is clear such embodiments are likewise applicable in cable configuration with two or more axes.

As indicated by an arrow running in the opposite direction the reverse path for the cryogenic medium is provided in annular gap 9 formed by the inner pipe 5 and the mid-positioned pipe 6. For thermally insulating the forward path toward the reverse path, in annular gap 8 present between the outer surface of the conductor envelope 4 and the inner pipe 5 a thermal insulation is provided, for example a vacuum and/or super insulation. Preferably, a further thermal insulation is provided in the outer gap 10, here formed between the mid-positioned pipe 6 and the outer pipe 7. For thermal insulation also the annular gap 10 can be evacuated and/or comprise superinsulation.

The conductor envelope 4 and the concentrically arranged pipes 5, 6, 7 can be formed of metal tubes. The metal tubes can be corrugated. For example, helically corrugated metal tubes can be produced by continuous forming of a metal band to a slit tube, welding the slit, and corrugation of the tube using known techniques.

Typical examples of suitable metals are stainless steel and aluminium.

The conductor envelope 4 can be also made from a plastic material.

Also materials for superinsulation are well-known in the art and any of such material can be used for the present invention. Examples for suitable materials for superinsulation are nonwoven plastic material or nonwoven material such as glasfibers or ceramic materials.

Within one or more of the gaps 8 - 11 spacers can be provided to space apart adjacent pipes. Typically, the spacers are also made of a material of very low heat conductivity, such as the materials used as superinsulation.

In the construction of a spacer the temperature difference between adjacent pipes which are spaced apart by the respective spacers must be considered. On cooling pipes close to the cooled cable core undergo shrinkage whereas pipes at the room temperature site maintain their lengths. For example, referring to figure 2 with the conventional superconducting cable, on cooling conductor envelope 4 undergoes shrinkage whereas pipe 7, being at the room temperature site, maintains its original length. In the construction of superconducting cables length change of adjacent pipes due to temperature effects must be taken into account.

If spacers are provided between pipes subject to the temperature effects referred to above the spacers must allow such length changes such as shrinkage which makes construction of the spacers more complicated. For example, it is not possible to use rigid spacers which cannot compensate such length change. According to the present invention length change on cooling of the mid-position pipe 6 can be avoided. In this embodiment rigid spacers can be used between the mid-position pipe 6 and the outer pipe 7. According to the present invention, typically, it is the conductor envelope 4 and/or the inner pipe 5 which undergo shrinkage on cooling.

The superconducting cable design of the present invention allows use of rigid spacers which enhances stability of the overall cable construction.

The layer or layers of the superconducting conductor can be formed as known in the art of production of superconducting cables. For example, superconducting wires or tapes can be wound helically around the central former. Two or more wires or tapes can be wound side by side to form a layer. The individual layers can be composed of two or more plies. The winding of each ply can be different in lay length, bending angle, number of wires or tapes, winding direction etc.

Wires or tapes can be used which are obtainable by the so-called OPIT (oxide powder in tube) method. According to the OPIT method a powdery superconducting material is filled into a metal tube, typically a noble metal tube such as silver or silver alloy, and drawn.

The superconducting wire or tape can be a coated conductor, which are also referred to as "second generation superconductors". Coated conductors comprise a single or multiple combination of high temperature superconductor layers deposited onto a substrate and, typically, at least one buffer layer between the substrate and the high temperature superconductor layer. Preferably, the high temperature superconductor layer has a high degree of orientation and is biaxially textured. The high temperature superconductor layer as well as the buffer layers can be obtained by a plurality of well-known deposition techniques such as chemical vapor deposition or physical vapor deposition. Further, solution deposition methods have been evaluated, which offer much lower costs, since vacuum systems are not needed. Typical solution deposition methods are known as chemical solution deposition, in particular metal organic deposition, such as trifluoroacetate solution processes.

Preferably, the coated conductor is one which is obtainable by RABiTS method ("rolling assisted biaxially textured substrate"). This process makes use of a suitably textured metal substrate obtained by rolling and heat treating a metal of suitable crystal structure for recrystallization in the desired biaxial texture. The texture of the substrate is then transferred to the buffer layer(s) and, finally, to the high temperature superconductor layer to be deposited via epitaxial growth.

In principle, the present invention is not restricted to a specific type of superconductor. Superconductors are generally classified as either low or high temperature superconductors. High temperature superconductors are defined to have an onset or critical temperature (Tc) above the temperature of liquid nitrogen (77°K).

Suitable high temperature superconductors include, but are not limited to, ceramic oxide high temperature superconductors (referred to in the following "htsc") such as bismuth-based htsc, yttrium-based htsc, thallium-based htsc and mercury-based htsc.

Typical examples comprise Bi-Ae-Cu-O_{y}, (Bi, Pb)-Ae-Cu-O_{y}, Y-Ae-Cu-O_{y}, (Y, Re)-Ae-Cu-Oy, Tl-Ae-Cu-O_{y}, (Tl, Pb)-Ae-Cu-O_{y} and Hg-Ae-Cu-O_{y}. In the above formula Ae means at least one alkaline earth element, particularly, Ba, Ca and Sr; Re means at least one rare earth element, particularly, La, Lu, Sc, Ce, Nd and Yb; and y represents the relative oxygen content in the range appropriate for the particular htsc.

Particularly preferred htsc are those known by the reference BSCCO-2212, BSCCO-2223, wherein the numerical combinations 2212 and 2223 stand for the stoichiometric ratios of the element Bi, Sr, Ca and Cu, in particular those, wherein part of Bi is substituted by Pb; and those known by the reference YBCO-123 and YBCO-211, wherein the numerical combinations 123 and 211 stand for the stoichiometric ratios of the elements Y, Ba and Cu.

Between the superconducting conductors an electrical insulation layer is provided. Examples of electrical insulation material are plastics, paper or plastic-laminate paper and any other material known for such a purpose. Said electrical insulation layer may be formed from a film or a tape composed of the insulating material. The electrically insulation layer may be formed, for example, by helically lapping an insulating paper or tape around the surface of the part of the present cable onto which the insulation layer is to be applied.

According to need also onto the former an electrical insulation layer can be provided.

The former can be made of a metal or a plastic material. It can be hollow or solid. Further, it can be formed of a mesh or braid.

Since cooling media like liquid nitrogen are also common electrical insulators according to one embodiment the outer electrical insulation layer 3c can be omitted. Sufficient electrical insulation of the outer superconducting conductor 2c is ensured by the cooling medium flowing in annular gap 11 adjacent to the inner surface of conductor envelope 4.

Further, according to need, the superconducting cable can comprise a return conductor. Suitable materials for such return conductor are metal or a superconducting material, for example, as referred to above for the superconducting conductor, without being restricted thereto.

For example, the return conductor can be arranged within the cable core. For example, a separate axis can be provided for the return conductor. In case of a cable core with more than one axis for the superconducting conductors the return conductor can surround the axes with the superconducting conductors. For example, in a cable for a three phase current with three axes a forth axis for the return conductor can be provided or the return conductor can surround the three axes for the three phases.

In a coaxial cable arrangement a further concentrical conductor layer can be applied for the return conductor. For example, in the embodiment shown in figure 1 a forth conductor layer can be concentrically applied, for example onto the outermost superconducting layer 3c.

According to a further embodiment, the return conductor can be provided within the reverse path of the cooling medium. For example, the mid-positioned pipe 6 and/or the inner pipe 5 can serve as return conductor.

The thermal insulation regions of the pipe arrangement surrounding the cable core for heat insulation can be separated from each other or being connected to each other.

For example, in the embodiment shown in figure 1 the inner thermal insulation formed by inner gap 8 and the outer thermal insulation formed by outer gap 10 can be separated or can be connected to each other.

The principle of the present invention wherein the reverse path of the cooling medium is located in an annular region outside of the cable core but within the pipe arrangement for heat insulation provides a plurality of advantages.

By the arrangement of the present invention any heat input from the outside is absorbed by the return path of the cooling medium. Since the cooling medium in the forward path formed by the annular gap 11 adjacent to the inner surface of the conductor envelope 4 can simultaneously serve as electrical insulation it is not necessary to provide an electrical insulation layer on the outermost superconducting conductor, thus, simplifying cable construction.

In addition any heat exchange between forward path and reverse path is prevented.

By the arrangement of the present invention it is possible to obtain cables of longer length without any connection to a cooling equipment for maintaining the cryogenic medium in the cooled state.

Further, the only losses effective within the cable core are AC-losses and dielectric losses.

### Reference numeral

- 1: former
- 2a, 2b, 2c: superconducting conductor
- 3a, 3b, 3c: electrical insulation layer
- 4: conductor envelope
- 5: inner pipe
- 6: mid-positioned pipe
- 7: outer pipe
- 8: inner gap
- 9: mid-positioned gap

- 10: outer gap
- 11: annular gap present adjacent to the inner surface of conductor envelope 4

## Claims

1. Superconductor cable comprising a cable core housed in a concentrical pipe arrangement for heat insulation, wherein the cable core comprises at least one former (1), at least one superconducting conductor (2a), (2b), (2c) and a conductor envelope (4) surrounding the cable core, wherein the pipe arrangement comprises an inner pipe (5), a mid-positioned pipe (6) and an outer pipe (7) being spaced apart from each other thereby forming annular gaps (9), (10), wherein an inner annular gap (8) is provided between conductor envelope (4) and inner pipe (5), **characterised in that** the coolant forward path is located within the cable core, and the coolant reverse path within the pipe arrangement, and wherein between the cable core and the coolant reverse path a thermal insulation is provided.

2. Superconducting cable according to claim (1),
**wherein** the heat insulation is in inner gap (8) present between conductor envelope (4) and inner pipe (5).

3. Superconducting cable according to claim (1) or (2),
**wherein** the coolant reverse path is located in gap (9) formed between inner pipe (5) and mid-positioned pipe (6).

4. Superconducting cable according to any of claims (1) to (3),
**wherein** the coolant forward path is located between an annular gap (11) present adjacent to the inner surface of conductor envelope (4) and/or in the interior of hollow former (1).

5. Superconducting cable according to any of the preceding claims,
**wherein** a return conductor is provided within the coolant reverse path or within the conductor envelope (4).

6. Superconducting cable according to any of the preceding claims,
**wherein** the cable core comprises at least two concentrically arranged superconducting conductors (2a), (2b), (2c) wherein adjacent superconducting conductors are separated by an electrical insulation layer (3a), (3b), (3c).

7. Superconducting cable according to claim (6),
**wherein** an electrical insulation layer (3c) is provided onto the outermost superconducting conductor (2c).

8. Superconducting cable according to claim 6 or 7,
**wherein** the coolant provides the electrical insulation between the outermost superconducting conductor (2c) and the conductor envelope (4).

9. Superconducting cable according to claim 6,
**wherein** the conductor envelope (4) is not electrically insulated from and at the same potential as the outermost superconducting conductor (2c).

10. Superconducting cable according to any of the preceding claims,
**wherein** the superconducting cable is a coaxial cable with one central axis wherein the central axis is provided by a former onto which one or more superconducting conductors (2a, 2b, 2c) are concentrically arranged, and **wherein** adjacent superconducting conductors (2a, 2b, 2c) are separated by an electrical insulation layer (3a, 3b, 3c).

11. Superconducting cable according to any of the claims 1 to 9,
**wherein** the cable core comprises at least two axes provided by formers, **wherein** onto each former at least one superconducting conductor (2a, 2b, 2c) is arranged.

12. Superconducting cable according to any of the preceding claims,
**wherein** the inner annular gap (8) for heat insulation and the outer annular gap (10) for heat insulation are connected to each other.

13. Superconducting cable according to any of the preceding claims,
**wherein** the mid-positioned pipe (6) and/or the inner pipe (5) serves as the return conductor.

14. Superconducting cable according to any of the preceding claims,
**wherein** the mid-positioned pipe (6) and/or the outer pipe (7) do not undergo shrinkage on cooling.

15. Superconducting cable according to any of the preceding claims,
**wherein** the conductor envelope (4) and/or the inner pipe (5) do undergo shrinkage on cooling.

## Patentansprüche

1. Supraleitendes Kabel, umfassend einen Kabelkern, der in einer konzentrischen Rohranordnung zur Hitzeisolierung aufgenommen ist, wobei der Kabelkern mindestens einen Wickelkörper (1) umfasst, mindestens einen supraleitenden Leiter (2a), (2b), (2c) und eine Leiterhülle (4), die den Kabelkern umgibt, wobei die Rohranordnung ein inneres Rohr (5), ein in der Mitte positioniertes Rohr (6) und ein äußeres Rohr (7) umfasst, die voneinander beabstandet sind, wobei sie ringförmige Zwischenräume (9), (10) bilden, wobei ein innerer ringförmiger Zwischenraum (8) zwischen der Leiterhülle (4) und dem inneren Rohr (5) bereitgestellt ist, **dadurch gekennzeichnet, dass** Vorwärtspfad des Kühlmittels innerhalb des Kabelkerns angeordnet ist und der Rückwärtspfad des Kühlmittels innerhalb der Rohranordnung angeordnet ist, und wobei zwischen dem Kabelkern und dem Rückwärtspfad des Kühlmittels eine thermische Isolierung bereitgestellt ist.

2. Supraleitendes Kabel nach Anspruch 1, wobei
sich die Hitzeisolierung im inneren Zwischenraum (8) befindet, der zwischen der Leiterhülle (4) und dem inneren Rohr (5) vorhanden ist.

3. Supraleitendes Kabel nach Anspruch 1 oder 2,
wobei der Rückwärtspfad des Kühlmittels im Zwischenraum (9) angeordnet ist, der zwischen dem inneren Rohr (5) und dem im der Mitte positionierten Rohr gebildet ist.

4. Supraleitendes Kabel nach einem der Ansprüche 1 bis 3,
wobei der Vorwärtspfad des Kühlmittels zwischen einem ringförmigen Zwischenraum (11), der benachbart zur inneren Fläche der Leiterhülle (4) anwesend ist, und dem Inneren des hohlen Wickelkörpers (1) angeordnet ist.

5. Supraleitendes Kabel nach einem der vorhergehenden Ansprüche, wobei ein Rückleiter innerhalb der des Rückwärtspfads des Kühlmittels oder innerhalb der Leiterhülle (4) bereitgestellt ist.

6. Supraleitendes Kabel nach einem der vorhergehenden Ansprüche, wobei
der Kabelkern mindestens zwei konzentrisch angeordnete supraleitende Leiter (2a), (2b), (2c) umfasst, wobei die benachbarten supraleitenden Leiter durch eine elektrische Isolierschicht (3a), (3b), (3c) getrennt sind.

7. Supraleitendes Kabel nach Anspruch 6, wobei
die elektrische Isolierschicht (3c) auf dem äußersten supraleitenden Leiter (2c) bereitgestellt ist.

8. Supraleitendes Kabel nach Anspruch 6 oder 7,
wobei das Kühlmittel die elektrische Isolierung zwischen dem äußersten supraleitenden Leiter (2c) und der Leiterhülle (4) bereitstellt.

9. Supraleitendes Kabel nach Anspruch 6,
wobei die Leiterhülle (4) nicht elektrisch vom äußersten supraleitenden Leiter (2c) isoliert ist und auf dem gleichen Potential wie dieser liegt.

10. Supraleitendes Kabel nach einem der vorhergehenden Ansprüche, wobei
das supraleitende Kabel ein koaxiales Kabel mit einer zentralen Achse ist, wobei die zentrale Achse durch einen Wickelkörper bereitgestellt ist, auf dem ein oder mehrere supraleitende Leiter (2a, 2b, 2c) konzentrisch angeordnet sind, und
wobei die supraleitenden Leiter (2a, 2b, 2c) durch eine elektrische Isolierschicht (3a, 3b, 3c) getrennt sind.

11. Supraleitendes Kabel nach einem der Ansprüche 1 bis 9,
wobei der Kabelkern mindestens zwei Achsen, bereitgestellt von Wickelkörpern, umfasst,
wobei auf jedem Wickelkörper mindestens ein supraleitender Leiter (2a, 2b, 2c) angeordnet ist.

12. Supraleitendes Kabel nach einem der vorhergehenden Ansprüche, wobei
der innere ringförmige Zwischenraum (8) für Hitzeisolierung und der äußere ringförmige Zwischenraum (10) für Hitzeisolierung miteinander verbunden sind.

13. Supraleitendes Kabel nach einem der vorhergehenden Ansprüche, wobei
das in der Mitte positionierte Rohr (6) und/oder das innere Rohr (5) als der Rückleiter dient.

14. Supraleitendes Kabel nach einem der vorhergehenden Ansprüche, wobei
das in der Mitte positionierte Rohr (6) und/oder das äußere Rohr (7) keiner Schrumpfung bei der Kühlung unterzogen werden.

15. Supraleitendes Kabel nach einem der vorhergehenden Ansprüche, wobei
die Leiterhülle (4) und/oder das innere Rohr (5) sehr wohl einer Schrumpfung bei der Kühlung unterzogen werden.

## Revendications

1. Câble supraconducteur comprenant une âme de câble logée dans un agencement de tuyaux concentrique pour l'isolation thermique, dans lequel l'âme de câble comprend au moins un gabarit (1), au moins un conducteur supraconducteur (2a), (2b), (2c) et une enveloppe de conducteur (4) entourant l'âme de câble, dans lequel l'agencement de tuyaux comprend un tuyau intérieur (5), un tuyau positionné au milieu (6) et un tuyau extérieur (7) espacés les uns des autres, formant de ce fait des espaces annulaires (9), (10), dans lequel un espace annulaire intérieur (8) est prévu entre l'enveloppe de conducteur (4) et le tuyau intérieur (5),
**caractérisé en ce que**
le trajet avant de fluide de refroidissement est situé dans l'âme de câble, et le trajet inverse de fluide de refroidissement est situé dans l'agencement de tuyaux, et dans lequel, entre l'âme de câble et le trajet inverse de fluide de refroidissement, une isolation thermique est prévue.

2. Câble supraconducteur selon la revendication (1),
dans lequel l'isolation thermique est dans l'espace intérieur (8) présent entre l'enveloppe de conducteur (4) et le tuyau intérieur (5).

3. Câble supraconducteur selon la revendication (1) ou (2),
dans lequel le trajet inverse de fluide de refroidissement est situé dans l'espace (9) formé entre le tuyau intérieur (5) et le tuyau positionné au milieu (6).

4. Câble supraconducteur selon l'une quelconque des revendications (1) à (3),
dans lequel le trajet avant de fluide de refroidissement est situé entre un espace annulaire (11) présent adjacent à la surface intérieure de l'enveloppe de conducteur (4) et/ou à l'intérieur du gabarit creux (1).

5. Câble supraconducteur selon l'une quelconque des revendications précédentes,
dans lequel un conducteur de retour est prévu dans le trajet inverse de fluide de refroidissement ou dans l'enveloppe de conducteur (4).

6. Câble supraconducteur selon l'une quelconque des revendications précédentes,
dans lequel l'âme de câble comprend au moins deux conducteurs supraconducteurs agencés de manière concentrique (2a), (2b), (2c), dans lequel les conducteurs supraconducteurs adjacents sont séparés par une couche d'isolement électrique (3a), (3b), (3c).

7. Câble supraconducteur selon la revendication (6),
dans lequel une couche d'isolement électrique (3c) est prévue sur le conducteur supraconducteur le plus à l'extérieur (2c).

8. Câble supraconducteur selon la revendication 6 ou 7, dans lequel le fluide de refroidissement réalise l'isolement électrique entre le conducteur supraconducteur le plus à l'extérieur (2c) et l'enveloppe de conducteur (4).

9. Câble supraconducteur selon la revendication 6,
dans lequel l'enveloppe de conducteur (4) n'est pas isolée électriquement du conducteur supraconducteur le plus à l'extérieur (2c) et au même potentiel que celui-ci.

10. Câble supraconducteur selon l'une quelconque des revendications précédentes,
dans lequel le câble supraconducteur est un câble coaxial avec un axe central, dans lequel l'axe central est réalisé par un gabarit sur lequel un ou plusieurs conducteurs supraconducteurs (2a, 2b, 2c) sont agencés de manière concentrique, et
dans lequel les conducteurs supraconducteurs (2a, 2b, 2c) adjacents sont séparés par une couche d'isolement électrique (3a, 3b, 3c).

11. Câble supraconducteur selon l'une quelconque des revendications 1 à 9,
dans lequel l'âme de câble comprend au moins deux axes réalisés par des gabarits,
dans lequel, sur chaque gabarit, au moins un conducteur supraconducteur (2a, 2b, 2c) est agencé.

12. Câble supraconducteur selon l'une quelconque des revendications précédentes,
dans lequel l'espace annulaire intérieur (8) pour l'isolation thermique et l'espace annulaire extérieur (10) pour l'isolation thermique sont reliés l'un à l'autre.

13. Câble supraconducteur selon l'une quelconque des revendications précédentes,
dans lequel le tuyau positionné au milieu (6) et/ou le tuyau intérieur (5) servent de conducteur de retour.

14. Câble supraconducteur selon l'une quelconque des revendications précédentes,
dans lequel le tuyau positionné au milieu (6) et/ou le tuyau extérieur (7) ne subissent pas de retrait lors du refroidissement.

15. Câble supraconducteur selon l'une quelconque des revendications précédentes,
dans lequel l'enveloppe de conducteur (4) et/ou le tuyau intérieur (5) subissent un retrait lors du refroidissement.
